# EUROPÄISCHE PATENTSCHRIFT

(11) **EP 1 496 577 B1**
(45) Veröffentlichungstag und Bekanntmachung des Hinweises auf die Patenterteilung: **25.07.2007**
(21) Anmeldenummer: 04012404.2
(22) Anmeldetag: 26.05.2004
(51) Int. Cl.: H01R 13/66, H01R 31/06, H01L 31/042

(54) **Elektrische Anschluss- und Verbindungsdose**
Electrical termination and junction housing
Boîtier de terminaison et de jonction électrique

(30) Priorität: 11.07.2003 DE 10331780
(43) Veröffentlichungstag der Anmeldung: 12.01.2005
(73) Patentinhaber: G. Spelsberg GmbH & Co.KG, 58579 Schalksmühle (DE)
(72) Erfinder: Quardt, Dirk, 58638 Iserlohn (DE); Zborowski Zbigniew, 58509 Lüdenscheid (DE)
(74) Vertreter: Gesthuysen, von Rohr & Eggert

(56) Entgegenhaltungen:
- CH-A- 681 338
- DE-A1- 3 319 141
- DE-A1- 4 027 478
- DE-A1- 19 917 597
- GB-A- 2 183 936
- US-A1- 2002 193 001
- US-A1- 2003 228 787

## Beschreibung

Die Erfindung betrifft eine elektrische Anschluß- und Verbindungsdose zum Anschluß von Solarzellen eines Solarzellenmoduls, mit einem Gehäuse, zum Anschließen und Verbinden in das Gehäuse eingeführter Leitungen miteinander bzw. mit in dem Gehäuse vorgesehenen elektrischen oder/und elektronischen Einrichtungen.

Solche elektrischen Anschluß- und Verbindungsdosen sind aus dem Stand der Technik in vielfältiger Ausgestaltung bekannt wie z.B. aus US 2002/0193001 A.

Da die Ausgangsspannung einzelner Solarzellen im allgemeinen zu gering ist, um elektrische Geräte, wie Haushaltsgeräte oder ähnliches, zu betreiben, werden mehrere Solarzellen zu Solarzellenmodulen zusammengeschaltet. Dabei besteht einerseits die Möglichkeit der Reihenschaltung und andererseits die Möglichkeit der Parallelschaltung der Solarzellen im Solarzellenmodul. Durch ein Parallelschalten der Solarzellen addieren sich die einzelnen Ströme der Solarzellen zu einem Gesamtstrom. Dabei sollten die parallelgeschalteten Solarzellen allerdings im wesentlichen die gleichen physikalischen Eigenschaften haben, so daß sich in der Praxis das Parallelschalten von Solarzellen kaum durchgesetzt hat, insbesondere auch da eine einzelne Solarzelle bereits einen Strom von einigen Ampere liefern kann.

Bei der Zusammenstellung von Solarzellenmodulen mit einzelnen Solarzellen werden diese daher häufig in Reihe geschaltet. Ein Problem kann sich dabei jedoch dann ergeben, wenn ein Solarzellenmodul partiell abgeschattet wird, also eine Solarzelle oder einzelne Solarzellen des Solarzellenmoduls weniger oder gar keine Sonnenbestrahlung erhalten. Der Grund für eine verringerte Sonnenbestrahlung kann z. B. in einer Verschmutzung der Solarzellen oder in Schattenwürfe von Bäumen, Gebäudeeinrichtungen oder Gebäuden selbst liegen.

Im Gegensatz zu einer Abschattung des Solarmoduls gleichmäßig über seine gesamte Fläche, die nur zu einer Leistungsverringerung insgesamt führt, ergibt sich bei einer partiellen Abschattung folgendes Problem: Durch die in Reihe geschalteten Solarzellen des Solarzellenmoduls fließt ein gemeinsamer Strom, wobei jede einzelne Solarzelle mit ihrer jeweiligen Spannung zur Gesamtspannung des Solarzellenmoduls beiträgt. Wird nun eine Solarzelle abgeschattet, so erzeugt diese keine Spannung mehr und setzt dem Stromfluß im Solarzellenmodul praktisch eine Diode in Sperrichtung entgegen. Dies bedeutet jedoch, daß das gesamte Modul keinen Strom mehr liefern kann, so daß die gesamte Funktion des Solarmoduls beeinträchtigt ist.

Ferner gilt, daß an der abgeschatteten Solarzelle eine Spannung anliegt, die abhängig ist von der Position der abgeschatteten Solarzelle in der Reihenschaltung. Ist diese an der abgeschatteten Solarzelle anliegende Spannung größer als ihre Sperrspannung, so wird es in der Solarzelle zu einem Durchschlag und damit zu einer dauerhaften Beschädigung kommen.

Selbst wenn es zu keiner Beschädigung der Solarzelle durch einen Durchschlag kommen sollte, wird in einer abgeschatteten Solarzelle eine große Verlustleistung umgesetzt, so daß sich die abgeschattete Solarzelle aufheizt. Auch eine solche Aufheizung kann zu Beschädigungen an der abgeschatteten Solarzelle sowie an den ihr benachbarten Solarzellen führen.

Um die mit teilweise abgeschatteten Solarzellen verbundene Problematik zu vermeiden, werden häufig Dioden, sogenannte Bypass-Dioden, verwendet, die antiparallel zu den Solarzellen geschaltet werden. Auf diese Weise wird erreicht, daß eine abgeschattete Solarzelle zwar keinen Anteil mehr zur Gesamtspannung des Solarzellenmoduls leistet, der Stromfluß jedoch trotzdem erhalten bleibt. Das Solarzellenmodul zeigt somit lediglich eine verminderte Betriebsspannung, fällt jedoch nicht vollständig aus. Außerdem wird in der abgeschatteten Solarzelle keine Leistung mehr umgesetzt, so daß eine Beschädigung der abgeschatteten Solarzelle vermieden werden kann.

Grundsätzlich könnte jeder Solarzelle eines Solarzellenmoduls genau eine Diode zugeordnet sein. Häufig wird jedoch so vorgegangen, daß eine Mehrzahl hintereinandergeschalteter Solarzellen jeweils durch eine gemeinsame Diode abgesichert wird.

Elektrische Anschluß- und Verbindungsdosen, die für Solarzellenmodule verwendet werden, weisen somit im allgemeinen auch immer eine Mehrzahl von Bypass-Dioden auf. Damit ist jedoch das Problem verbunden, daß die für Solarzellenmodule verwendeten elektrischen Anschluß- und Verbindungsdosen jeweils so zugänglich sein müssen, daß beschädigte Dioden ausgetauscht werden können. Darüber hinaus kommt es durch die in den Bypass-Dioden umgesetzte Leistung zu einer nicht unerheblichen Erwärmung der für Solarzellenmodule verwendeten elektrischen Anschluß- und Verbindungsdosen.

Aufgrund der zuvor geschilderten Problematik ist es die Aufgabe der Erfindung, eine für den Anschluß von Solarzellenmodulen vorgesehene elektrische Anschluß- und Verbindungsdose anzugeben, die ein einfaches Austauschen darin vorgesehener elektrischer oder/und elektronischer Einrichtungen, wie defekter Bypass-Dioden, gewährleistet und darüber hinaus vorzugsweise im Betrieb eine nur geringe Erwärmung zeigt.

Diese Aufgabe ist durch die Merkmalskombination des kennzeichnenden Teils des Anspruchs 1 gelöst.

Ausgehend von der eingangs beschriebenen elektrischen Anschluß- und Verbindungsdose ist die zuvor hergeleitete und aufgezeigte Aufgabe der Erfindung dadurch gelöst, daß ein elektrische oder/und elektronische Einrichtungen aufweisendes Ansteckmodul vorgesehen ist, das mittels einer einen Stecker und eine Buchse umfassenden Steckverbindung an das Gehäuse angesteckt ist, so daß die elektrischen oder/und elektronischen Einrichtungen des Ansteckmoduls mit den in dem Gehäuse vorgesehenen Leitungen bzw. elektrischen oder/und elektronischen Einrichtungen verbunden sind, wobei die elektrischen oder/und elektromischen Einrichtungen des Ansteckmoduls eine Bypass-Diode für die Solarzellen umfassen*.*

Erfindungsgemäß wird also ein von dem Gehäuse der elektrischen Anschlußund Verbindungsdose verschiedenes Ansteckmodul vorgesehen, das elektrische Einrichtungen, wie Dioden, aufweisen kann. Dies ist insofern vorteilhaft, als daß zum Austausch der elektrischen oder/und elektronischen Einrichtungen des Ansteckmoduls, also z. B. von Bypass-Dioden für Solarzellen eines Solarzellenmoduls, das Gehäuse der elektrischen Anschluß- und Verbindungsdose nicht mehr geöffnet werden muß. Vielmehr kann das Ansteckmodul, das eine defekte elektrische oder/und elektronische Einrichtung, also z. B. eine defekte Bypass-Diode aufweist, einfach abgezogen und durch ein neues Ansteckmodul ersetzt werden, das einfach wieder an das Gehäuse angesteckt werden kann.

Weiterhin gilt, daß durch das separate Vorsehen des Ansteckmoduls durch die in dem Ansteckmodul vorgesehenen elektrischen oder/und elektronischen Einrichtungen erzeugte Wärme nur zu ganz geringen Teilen auf das Gehäuse der elektrischen Anschluß- und Verbindungsdose übergeht. Im Vergleich mit dem Stand der Technik kann somit eine Erwärmung der elektrischen Anschluß- und Verbindungsdose ganz erheblich verringert werden.

Grundsätzlich kann das Ansteckmodul mittels der Steckverbindung direkt mit dem Gehäuse verbunden sein, wobei als Steckverbindung z. B. ein an dem Gehäuse der elektrischen Anschluß- und Verbindungsdose vorgesehener Stecker und eine mit diesem Stecker zusammenwirkende Buchse am Ansteckmodul vorgesehen sein kann. Gemäß einer bevorzugten Weiterbildung der Erfindung ist vorgesehen, daß zwischen dem Gehäuse und dem Ansteckmodul ein Zwischenstecker vorgesehen ist. Dabei gilt sowohl für ein direktes Anstecken des Ansteckmoduls an das Gehäuse der elektrischen Anschluß- und Verbindungsdose als auch für ein Anstecken des Ansteckmoduls über ein zwischen dem Ansteckmodul und dem Gehäuse vorgesehenen Zwischenstecker, daß zwischen Gehäuse und Ansteckmodul bzw. Gehäuse, Zwischenstecker und Ansteckmodul keine weiteren Leitungen vorgesehen sind, Gehäuse und Ansteckmodul bzw. Gehäuse, Zwischenstecker und Ansteckmodul also direkt miteinander verbunden und zusammengesteckt sind.

Mit einem gemäß einer bevorzugten Weiterbildung der Erfindung vorgesehenen Zwischenstecker sind verschiedene Vorteile verbunden:

So kann ein solcher Zwischenstecker nämlich einen Diagnoseanschluß für ein externes Meßgerät aufweisen. Damit wird die Möglichkeit geschaffen, über die elektrische Anschluß- und Verbindungsdose angeschlossene bzw. verbundene Einrichtungen im laufenden Betrieb zu überprüfen.

Alternativ oder zusätzlich dazu kann vorgesehen sein, daß der Zwischenstekker einen Meßleitungsanschluß zum Anschließen einer Meßleitung aufweist. Damit kann ein Meß- oder Anzeigegerät auch entfernt von der elektrischen Anschluß- und Verbindungsdose angeordnet werden, so daß zum Überprüfen der mittels der elektrischen Anschluß- und Verbindungsdose angeschlossenen bzw. verbundenen elektrischen Einrichtungen nicht direkt an der elektrischen Anschluß- und Verbindungsdose gemessen werden muß. Gegenüber fest verbundenen Leitungen zum Überprüfen oder Überwachen der über die elektrische Anschluß- und Verbindungsdose angeschlossenen bzw. verbundenen elektrischen oder/und elektronischen Einrichtungen weist ein solcher Zwischenstecker eine höhere Flexibilität auf, insbesondere kann der Zwischenstecker nämlich ohne weiteres wieder von der elektrischen Anschluß- und Verbindungsdose entfernt werden, so daß er dort im normalen Betrieb nicht weiter stört.

Grundsätzlich können die elektrischen oder/und elektronischen Einrichtungen in dem Ansteckmodul frei, z. B. auf einer Platine, angeordnet sein. Gemäß einer bevorzugten Weiterbildung der Erfindung ist jedoch vorgesehen, daß die elektrischen oder/und elektronischen Einrichtungen in dem Ansteckmodul in ein Vergußmittel eingegossen sind. Insbesondere kommt ein Vergießen in ein Kunstharzmittel in Betracht, wie auch aus anderen Bereichen bei elektrischen Schaltungen bekannt.

Ein solches Vergießen der elektrischen oder/und elektronischen Einrichtungen in dem Ansteckmodul hat mehrere Vorteile:

Durch das direkt an den elektrischen oder/und elektronischen Einrichtungen anliegende Vergußmittel kann die in den elektrischen oder/und elektronischen Einrichtungen entstehende Wärme besser von diesen abgeführt werden, als wenn die elektrischen oder/und elektronischen Einrichtungen lediglich mit der in dem Ansteckmodul vorhandenen Umgebungsluft in Berührung stünden. Außerdem schützt das Vergußmittel die elektrischen oder/und elektronischen Einrichtungen vor äußeren Einwirkungen, insbesondere nämlich mechanischen Belastungen oder der Auswirkung von Nässe und Feuchtigkeit.

Wie weiter oben schon angedeutet, ist die erfindungsgemäße elektrische Anschluß- und Verbindungsdose zum Anschluß von Solarzellen eines Solarzellenmoduls vorgesehen. Die elektrische Anschluß- und Verbindungsdose ist mittels des Gehäuses an dem Solarzellenmodul oder einem Dach befestigt. Das Ansteckmodul ist werkzeugfrei von dem Gehäuse lösbare. Schließlich gilt weiterhin, daß das Ansteckmodul vorzugsweise eine Mehrzahl von Bypass-Dioden für die Solarzellen des Solarzellenmoduls aufweist. Damit wird ein einfacher Wechsel des Ansteckmoduls zum Ersatz defekter Bypass-Dioden ermöglicht, ohne das Gehäuse der elektrischen Anschluß- und Verbindungsdose öffnen zu müssen und ohne ein Werkzeug zu verwenden.

Sind die Bypass-Dioden in dem Ansteckmodul ferner gemäß einer bevorzugten Weiterbildung der Erfindung, wie weiter oben schon angedeutet, in ein Vergußmittel eingegossen, so wird darüber hinaus die in den Bypass-Dioden umgesetzte Leistung, die zu einer Erwärmung der Bypass-Dioden fiihrt, gut nach außen abgeführt.

Im einzelnen gibt es nun eine Vielzahl von Möglichkeiten, die Erfindung weiter auszugestalten und weiterzubilden. Dazu wird auf die den unabhängigen Patentansprüchen nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: eine elektrische Anschluß- und Verbindungsdose gemäß einem bevorzugten Ausführungsbeispiel der Erfindung in perspektivischer Ansicht und
- Fig. 2: die elektrische Anschluß- und Verbindungsdose gemäß dem bevorzugten Ausführungsbeispiel der Erfindung mit ihrer elektrischen Verschaltung.

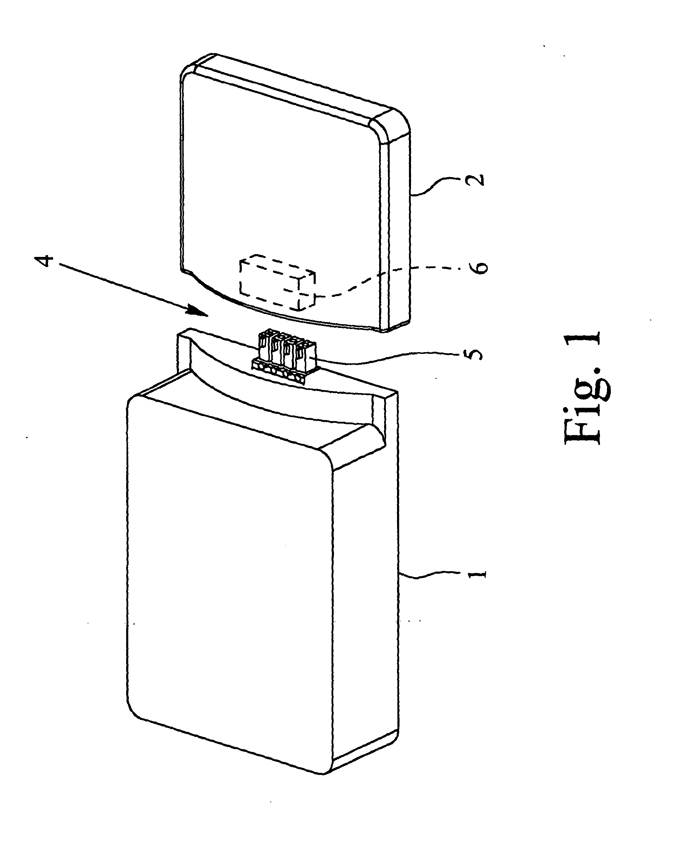

Aus Fig. 1 ist eine elektrische Anschluß- und Verbindungsdose gemäß einem bevorzugten Ausführungsbeispiel der Erfindung in perspektivischer Ansicht ersichtlich, das ein Gehäuse 1 sowie ein Ansteckmodul 2 aufweist. Bei der vorliegend beschriebenen elektrischen Anschluß- und Verbindungsdose gemäß dem bevorzugten Ausführungsbeispiel der Erfindung handelt es sich um eine sogenannte Solardose, also um eine Dose zum Anschließen und Verbinden mehrerer Solarzellen eines Solarzellenmoduls, unter anderem mit Bypass-Dioden.

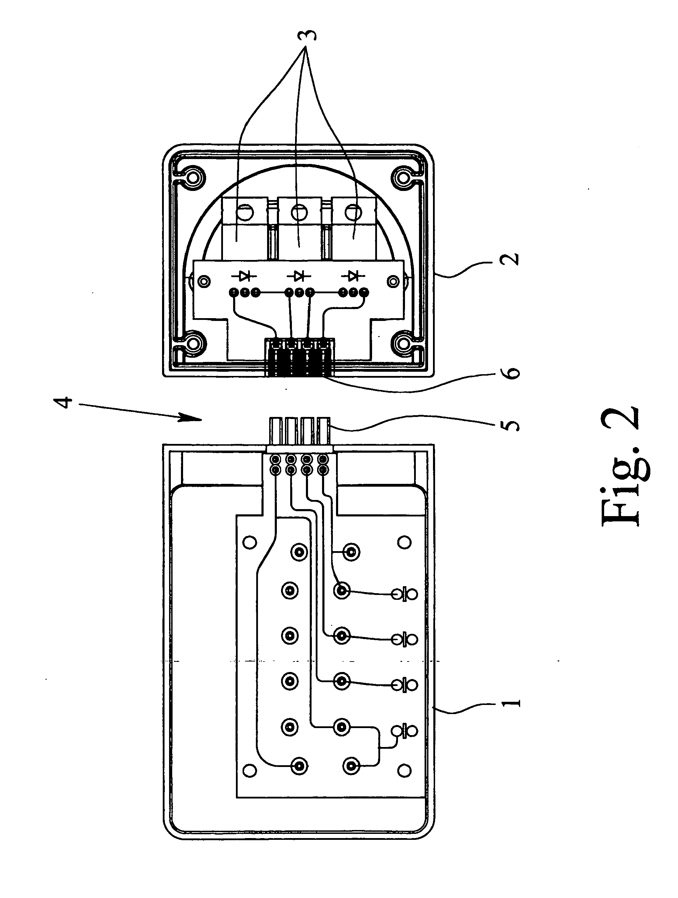

Dazu sind dem Gehäuse 1 nicht weiter dargestellte Leitungen zuführbar, z. B. durch eine Seitenwand oder durch den Boden des Gehäuses 1 hindurch. In dem Gehäuse 1 sind Anschlußmöglichkeiten, typischerweise in Form nicht weiter dargestellter Anschlußklemmen, vorgesehen. Eine mit den typischerweise in Form von Anschlußklemmen vorliegenden Anschlußmöglichkeiten erzielbare Verschaltung ist exemplarisch aus Fig. 2 ersichtlich. Das Ansteckmodul 2 weist, wie ebenfalls aus Fig. 2 ersichtlich, Dioden 3 auf, die als Bypass-Dioden für Solarzellen eines Solarzellenmoduls dienen.

Das Anschlußmodul 3 ist mittels einer Steckverbindung 4 an das Gehäuse 1 ansteckbar. Die Steckverbindung 4 besteht aus einem an dem Gehäuse 1 vorgesehenen Stecker 5 und einer diesem Stecker 5 entsprechenden Buchse 6 am Anschlußmodul 2. Über diese Steckverbindung 4 werden diejenigen Leitungsverbindungen aus dem Gehäuse 1 in das Anschlußmodul 2 geführt, die mit den Dioden 3 verbunden werden müssen, wie im Detail aus Fig. 2 ersichtlich.

Die Steckverbindung 4 mit Stecker 5 und Buchse 6 ist derart ausgebildet, daß das Anschlußmodul 2 einfach auf das Gehäuse 1 aufsteckbar ist, ohne ein Werkzeug verwenden zu müssen. Darüber hinaus können Stecker 5 und Buchse 6 der Steckverbindung 4 ohne weiteres derart ausgebildet werden, daß die erzielte Verbindung zwischen dem Gehäuse 1 und dem Anschlußmodul 2 so stabil ist, daß keine weiteren Einrichtungen zur Befestigung und zum Halten des Anschlußmoduls 2 am Gehäuse 1 vorgesehen werden müssen.

Zwischen dem Gehäuse 1 und dem Anschlußmodul 2 kann ein nicht weiter dargestellter Zwischenstecker vorgesehen werden. Ein solcher Zwischenstekker ist dabei typischerweise derart ausgebildet, daß er auf der Seite des Gehäuses 1 mit einer Buchse versehen ist, die der Buchse 6 des Anschlußmoduls 2 entspricht, und auf seiner dem Anschlußmodul 2 zugewandten Seite mit einem Stecker versehen ist, der dem Stecker 5 des Gehäuses 1 entspricht. Ferner weist der Zwischenstecker gleichzeitig oder alternativ einen Diagnoseanschluß für ein externes Meßgerät und einen Meßleitungsanschluß zum Anschließen einer Meßleitung auf. Damit lassen sich auf einfache Weise verschiedene Überprüfungsverfahren durchführen, unter anderem läßt sich nämlich prüfen, ob die Dioden 3 noch voll funktionsfähig sind und ob die einzelnen Solarzellen bzw. Reihen von Solarzellen vorschriftsmäßig arbeiten.

Gemäß dem vorliegend beschriebenen bevorzugten Ausführungsbeispiel der Erfindung ist ferner vorgesehen, daß die Dioden 3 im Anschlußmodul 2 in ein Vergußmittel eingegossen sind, und zwar derart, daß dieses Vergußmittel direkt an den Dioden 3 anliegt und außerdem vollständigen Kontakt zu den Innenwänden des Anschlußmoduls 2 aufweist. Mit Hilfe dieses Vergußmittels wird erreicht, daß die in den Dioden 3 entstehende Wärme effektiv nach außen an die Umgebung des Anschlußmoduls 2 abgeführt werden kann.

## Patentansprüche

1. Elektrische Anschluß- und Verbindungsdose zum Anschluß von Solarzellen eines Solarzellenmoduls, mit einem Gehäuse (1), zum Anschließen und Verbinden in das Gehäuse (1) eingeführter Leitungen miteinander bzw. mit in dem Gehäuse (1) vorgesehenen elektrischen oder/und elektronischen Einrichtungen, **dadurch gekennzeichnet, daß** ein elektrische oder/und elektronische Einrichtungen aufweisendes Ansteckmodul (2) vorgesehen ist, das mittels einer einen Stecker (5) und eine Buchse (6) umfassenden Steckverbindung (4) an das Gehäuse (1) angesteckt ist, so daß die elektrischen oder/und elektronischen Einrichtungen des Ansteckmoduls (2) mit den in dem Gehäuse (1) vorgesehenen Leitungen bzw. elektrischen oder/und elektronischen Einrichtungen verbunden sind, wobei die elektrischen oder/und elektronischen Einrichtungen des Ansteckmoduls (2) eine Bypass-Diode (3) für die Solarzellen umfassen.

2. Elektrische Anschluß- und Verbindungsdose nach Anspruch 1, **dadurch gekennzeichnet, daß** zwischen dem Gehäuse (1) und dem Ansteckmodul (2) ein Zwischenstecker vorgesehen ist.

3. Elektrische Anschluß- und Verbindungsdose nach Anspruch 2, **dadurch gekennzeichnet, daß** der Zwischenstecker einen Diagnoseanschluß für ein externes Meßgerät oder/und einen Meßleitungsanschluß zum Anschließen einer Meßleitung aufweist.

4. Elektrische Anschluß- und Verbindungsdose nach einem der Ansprüche 1 bis 3, **dadurch gekennzeichnet, daß** die elektrischen oder/und elektronischen Einrichtungen in dem Ansteckmodul (2) in ein Vergußmittel eingegossen sind.

5. Elektrische Anschluß- und Verbindungsdose nach einem der Ansprüche 1 bis 4, **dadurch gekennzeichnet, daß** das Ansteckmodul (2) eine Mehrzahl von Bypass-Dioden (3) aufweist.

## Claims

1. An electrical attachment and connection socket for the attachment of solar cells of a solar cell module with a housing (1), for the attachment and connection of lines introduced into the housing (1) with one another and/or with electrical or/and electronic devices provided in the housing (1),
**characterised in that** a plug-in module (2) having electrical or/and electronic devices is provided, that is plugged into the housing (1) by means of a plug-and-socket connection (4) comprising a plug (5) and a socket (6), such that the electrical or/and electronic devices of the plug-in module (2) are connected with the lines and/or electrical or/and electronic devices provided in the housing (1), wherein
the electrical or/and electronic devices of the plug-in module (2) comprises a bypass diode (3) for the solar cells.

2. The electrical attachment and connection socket according to Claim 1,
**characterised in that** an adapter plug is provided between the housing (1) and the plug-in module (2).

3. The electrical attachment and connection socket according to Claim 2,
**characterised in that** the adapter plug has a diagnostics attachment for an external item of measurement equipment or/and a measurement line attachment for the attachment of a measurement line.

4. The electrical attachment and connection socket according to one of the Claims 1 to 3,
**characterised in that** the electrical or/and electronic devices in the plug-in module (2) are cast into a casting medium.

5. The electrical attachment and connection socket according to one of the Claims 1 to 4,
**characterised in that** the plug-in module (2) has a multiplicity of bypass diodes (3).

## Revendications

1. Prise de raccordement et de liaison électrique pour raccorder un module de cellule solaire, comportant un boîtier (1), pour le raccordement et la liaison de lignes insérées dans le boîtier (1) les unes aux autres, respectivement avec des dispositifs électriques et/ou électroniques prévus dans le boîtier, **caractérisée en ce que** un module enfichable (2) présentant des dispositifs électriques et/ou électroniques est prévu, lequel est enfiché sur le boîtier (1) au moyen d'une liaison à connecteur comprenant un connecteur mâle (5) et un connecteur femelle (6), de telle sorte que les dispositifs électriques et/ou électroniques du module enfichable (2) soient reliés aux lignes, respectivement aux dispositifs électriques et/ou électroniques prévus dans le boîtier (1), moyennant quoi les dispositifs électriques et/ou électroniques du module enfichable (2) comprennent une diode de dérivation (3) destinée aux cellules solaires.

2. Prise de raccordement et de liaison électrique selon la revendication 1, **caractérisée en ce que**, entre le boîtier (1) et le module enfichable (2), un adaptateur est prévu.

3. Prise de raccordement et de liaison électrique selon la revendication 2, **caractérisée en ce que** l'adaptateur présente un raccordement de diagnostic d'un appareil de mesure externe et/ou un raccordement de ligne de mesure pour raccorder une ligne de mesure.

4. Prise de raccordement et de liaison électrique selon une des revendications 1 à 3, **caractérisée en ce que** les dispositifs électriques et/ou électroniques sont coulés dans le module enfichable en une masse de scellement.

5. Prise de raccordement et de liaison électrique selon une des revendications 1 à 4, **caractérisée en ce que** le module enfichable (2) présente une pluralité de diodes de dérivation (3).
